Europäisches Patentamt

European Patent Office

Office européen des brevets

(11) Veröffentlichungsnummer: **0 299 341**
**A2**

# (12) EUROPÄISCHE PATENTANMELDUNG

(21) Anmeldenummer: **88110752.8**

(22) Anmeldetag: **06.07.88**

(51) Int. Cl.4: **H01G 1/02**

(30) Priorität: **09.07.87 DE 3722626**

(43) Veröffentlichungstag der Anmeldung:
**18.01.89 Patentblatt 89/03**

(84) Benannte Vertragsstaaten:
**BE CH DE FR GB IT LI NL SE**

(71) Anmelder: **Standard Elektrik Lorenz
Aktiengesellschaft
Lorenzstrasse 10
D-7000 Stuttgart 40(DE)**

(72) Erfinder: **Danek, Heinz Dieter
Gabelsberger Weg 2
D-5790 Brilon(DE)**
Erfinder: **Maier, Werner Ludwig
Galvanistrasse 43
D-8500 Nürnberg(DE)**
Erfinder: **Robl, Gerhard
Hofäckerweg 5b
D-8504 Stein(DE)**
Erfinder: **Schimmang, Helmut
Fleischmannstrasse 28
D-8832 Weissenburg(DE)**

(74) Vertreter: **Hösch, Günther, Dipl.-Ing. et al
Standard Elektrik Lorenz AG Patent- und
Lizenzwesen Postfach 30 09 29
D-7000 Stuttgart 30(DE)**

(54) **Kondensator.**

(57) Ein Kondensator, bei dem der Kondensatorkörper in einem, mit einem Deckel (4) verschlossenen Becher (1) angeordnet ist, soll in der Weise gestaltet sein, daß die Befestigung des Deckels ohne großen Aufwand an Vorrichtungen, Material und Energie erfolgen kann. Zu diesem Zweck wird ein aus einem thermoplastischen Werkstoff bestehender Becher (1) verwendet, der nahe des inneren Becherrandes (2) mit einer Auflage (3) für den Deckel (4) versehen ist. Außerdem ist der Becherrand (2) am Deckelrand (6) plastisch verformt.

Fig. 1

## Kondensator

Die Erfindung bezieht sich auf einen Kondensator gemäß dem Oberbegriff des Anspruchs 1.

Bei Kondensatoren ist es bekannt, den Kondensatorbecher aus Aluminium herzustellen und den aus Isolierstoff bestehenden Deckel, der die Anschlüsse für den Kondensator trägt, auf eine nach innen gedrückte Sicke in der Becherwand aufzulegen und anschließend den überstehenden Becherrand durch Rollieren umzubördeln.

Aus verschiedenen Gründen werden auch Kondensatorbecher aus Kunststoff und u.a. auch aus thermoplastischem Kunststoff verwendet und in diesen der Deckel derart eingepreßt, daß er durch Reibungsschluß festsitzt oder mittels Rastverbindung eingeschnappt. Es ist auch bekannt, Kondensatorbecher und Deckel durch Ultraschallschweißen miteinander zu verbinden, zu verkleben oder den Raum über der Deckeloberfläche mit Gießharz oder Wachs auszugießen.

Der Erfindung liegt die Aufgabe zugrunde, bei einem Kondensator mit Kunststoffbecher eine gute Halterung des Deckels ohne großen Aufwand an Maschinen, Material und Energie zu erreichen.

Gelöst wird diese Aufgabe durch die im Kennzeichen des Anspruchs 1 angegebenen Merkmale. Überraschenderweise hat sich gezeigt, daß beim Umbördeln des Randes eines Bechers aus thermoplastischem Kunststoff eine plastische Verformung des Becherrandes ohne weiteres möglich ist, ohne daß zusätzlich Wärme oder sonstige Energie zugeführt werden muß. Dabei tritt keine oder wenigstens keine merkbare Herabsetzung der Festigkeit und Zähigkeit des Kunststoffes des Bechers ein. Der umgebördelte Rand bleibt in der umgebördelten Lage stabil, so daß der Deckel fest gegen die Unterlage im Becher gedrückt wird.

Weitere vorteilhafte Einzelheiten der Erfindung sind in den Unteransprüchen angegeben und nachfolgend anhand der in der Zeichnung veranschaulichten Ausführungsbeispiele beschrieben. Es zeigen:

Fig. 1 einen Kondensatorbecher mit einem Innenwulst und eingebördeltem Deckel,

Fig. 2 und 3 je einen Ausschnitt eines Kondensatorbechers mit einer inneren Auflage unterschiedlicher Ausführung und eingebördeltem Deckel.

Mit 1 ist ein Kondensatorbecher aus thermoplastischem Werkstoff bezeichnet, der unterhalb des Becherrandes 2 eine umlaufende Auflage 3 in Form eines umlaufenden Wulstes aufweist. Auf der Auflage 3 ist ein Deckel 4 aus Isolierstoff aufgelegt. Der Deckel 4 und die Auflage 3 sind zweckmäßigerweise als ineinanderrastbare oder -- schnappbare Rastglieder ausgebildet. Zu diesem Zweck ist an der Unterseite 5 des Deckels 4 ein von seinem Rand 6 aus etwas nach innen abgesetzter Kragen 7 angeformt, dessen Außenseite 8 der Form des die Auflage 3 bildenden Wulstes angepaßt ist. Die Unterkante 9 des Kragens 7 ist nach unten innen abgeschrägt, so daß sie leichter über die Auflage 3 schiebbar ist. Der Kragen 7 dient hier also als Zentrierglied und zugleich als Rastglied. Anstelle des umlaufenden Kragens 7 können auch nur entsprechend im Querschnitt ausgebildete, kurze Abschnitte, z.B. drei, insbesondere symmetrisch verteilt, vorgesehen sein.

In den Becher 1 ist ein nicht dargestellter Kondensatorkörper eingesetzt, dessen Anschlüsse in bekannter Weise am Deckel angebracht und von außen kontaktierbar sind.

Nach dem Einsetzen des Deckels 4 liegt dieser mit der Unterseite seines Randes 6 auf der Auflage 3 auf. Anschließend wird der überstehende Becherrand 2 mit einer Rolliervorrichtung 10 nach innen zur Oberseite 11 des Deckels umgebördelt. Überraschenderweise reißt dabei der Becherrand 2 nicht ein, und es tritt auch nach innen eine einwandfreie Stauchung des Bechermaterials auf. Die durch das Rollieren erhaltene Umbördelung des Becherrandes 2 ist materialbedingt ein nicht reversibler Vorgang, so daß der Deckel 4 dadurch mit ausreichender Haltekraft befestigt ist.

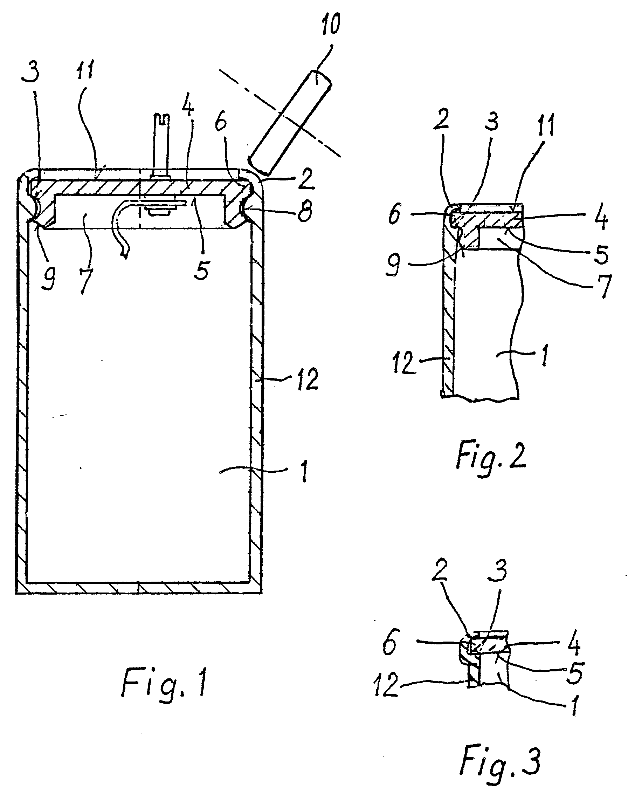

Bei dem in Fig. 2 gezeigten Ausführungsbeispiel ist die Auflage 3 dadurch gebildet, daß die Becherwand 12 derart innen verdickt ist, daß sie leicht konisch von unten nach oben verläuft. Ein solcher Becher kann bei der Herstellung leicht aus der Formmaschine entformt werden.

Anstelle einer Verdickung der Becherwand 12 kann auch der Becherrand 2 gemäß Fig. 3 nach außen erweitert und abgesetzt sein, so daß die Oberkante der Becherwand 12 die Auflage 3 bildet. Auf diese Weise kann der Becher ohne jegliche Hinterschneidung hergestellt werden.

Das Wesentliche der Erfindung ist immer die Verwendung von thermoplastischem Kunststoff für das Bechermaterial und das Umbördeln des Becherrandes durch Rollieren ohne zusätzliche Energiezufuhr, also ohne zusätzliche Erwärmung in irgendeiner Weise.

## Ansprüche

1. Kondensator, bei dem der Kondensatorkörper in einem Becher angeordnet ist, dessen offenes Ende mit einem, mit dem Becherrand verbundenen Deckel verschlossen ist, **dadurch gekennzeichnet**, daß der aus einem thermoplastischen Werkstoff bestehende Becher (1) nahe des inneren Becherrandes (2) eine Auflage (3) für den Deckel (4) besitzt, und der Becherrand (2) den Deckelrand (6) umfassend plastisch verformt ist.

2. Kondensator nach Anspruch 1, dadurch gekennzeichnet, daß der Becher (1) eine umlaufende Auflage (3) aufweist.

3. Kondensator nach Anspruch 2, dadurch gekennzeichnet, daß die Auflage (3) durch einen Innenwulst gebildet ist.

4. Kondensator nach Anspruch 2, dadurch gekennzeichnet, daß die Auflage (3) durch eine nach oben innen leicht konische Verdickung der Becherwand (11) gebildet ist.

5. Kondensator nach Anspruch 2, dadurch gekennzeichnet, daß die Auflage (3) durch einen nach außen weisenden Absatz im Becherrand (2) gebildet ist.

6. Kondensator nach einem der Ansprüche 2 bis 5, dadurch gekennzeichnet, daß der Deckel (4) einen inneren Kragen (7) aufweist, und der Kragen (7) und die Auflage (3) als miteinander verrastbare Rastglieder ausgebildet sind.

7. Kondensator nach Anspruch 6, dadurch gekennzeichnet, daß der Kragen (7) diskontinuierlich angeordnet ist.

Fig. 1

Fig. 2

Fig. 3